# EUROPEAN PATENT APPLICATION

(11) **EP 2 682 904 A1**
(43) Date of publication of application: **08.01.2014**
(21) Application number: 11878456.0
(22) Date of filing: 28.12.2011
(51) Int. Cl.: G06Q 10/06

(54) **PORTABLE TERMINAL MANAGEMENT SERVER AND PORTABLE TERMINAL MANAGEMENT PROGRAM**

(71) Applicant: IPS Co., Ltd., Kobe-shi, Hyogo 650-0044 (JP)
(72) Inventor: AKITA, Toshifumi, Kobe-shi Hyogo 650-0044 (JP)
(74) Representative: Thorniley, Peter
(86) International application number: PCT/JP2011/007344
(87) International publication number: WO 2013/098897

(57) **Abstract**

In a business system providing information relating to a form for a portable communication terminal, the security is further improved, and the processing load required for updating data or searching for data in an ERP system is reduced. A portable terminal managing server (10) operated by ERP includes a process f low DB (18) storing process flow data that is various kinds of data relating to a process flow including a plurality of business processes and is a data including status data, common data, and process specific data and provides the process flow data stored in the process flow DB (18) for a portable terminal (31) in accordance with a reading request for the process flow data from the portable terminal (31) that is in a login state.

## Description

### Technical Field

The present invention relates to a portable terminal managing server that is a server operated by ERP and provides various kinds of data through a communication network in accordance with a request from a portable terminal used by a user and a portable terminal managing program installed to a portable terminal managing server.

### Background Art

Conventionally, as package software used for building an enterprise system of a company, package software called enterprise resource planning (ERP) is in the main stream. Many enterprise systems (integrated enterprise systems or ERP systems) to which such ERP is installed are built on relational databases. Thus, many application programs are designed mainly for business processing, and there are many enterprise systems operated not mainly for outputting forms.

Under such circumstances, various data warehouse systems responsible for complementary roles of enterprise systems are provided which are for the purpose of processing a large amount of business data at a high speed, analyzing the business data from various angles, and outputting forms (see Patent Literature 1).

Such form inquiry systems used for the purpose of outputting forms, which provide information of a form or the like for a portable communication terminal (portable terminal), are proposed (see Patent Literatures 2 to 3).

### Citation List

### Patent Literature

Patent Literature 1: JP 2002-312208 A
Patent Literature 2: JP 2003-323582 A
Patent Literature 3: JP 2007-200136 A

### Summary of Invention

### Technical Problem

According to the above-described form inquiry systems providing information such as forms for portable communication terminals, while there is convenience of enabling the acquisition of information at a visiting place or during transportation, there is a problem of increasing the risk of information leakage. Thus, in form inquiry systems providing information of forms or the like for portable communication terminals, high-level security is required.

In a conventional ERP system, data (including data input by a user and data calculated based on various kinds of data) acquired in each business process is respectively registered in a dedicated data table (table) and is managed. In other words, in the conventional ERP system, tables to be updated differ for each input process such as order acceptance or a shipping instruction. Here, the "input process" represents a process of inputting various kinds of data acquired (or determined) by a supervisor of the ERP system in each business process to each table.

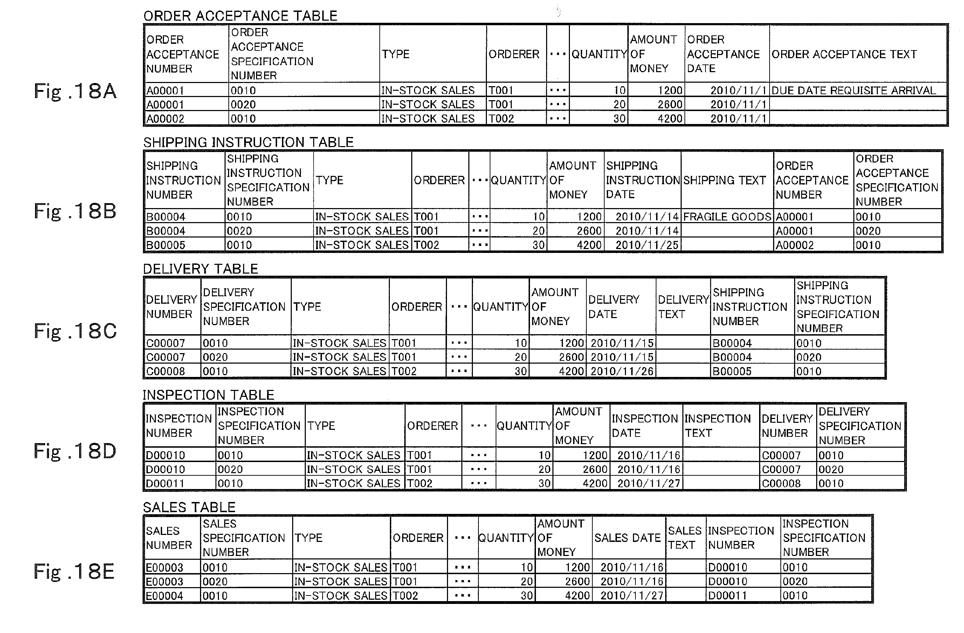

Fig. 18 is an explanatory diagram illustrating an example of the configuration of tables in the conventional ERP system. For example, in a case where a business flow (process flow) configured by a plurality of business processes represents "in-stock sales", there are five input processes of order acceptance, a shipping instruction, delivery, inspection, and sales. In this case, the tables storing data relating to the process flow of "in-stock sales" , for example, as illustrated in Figs. 18(A) to 18(E), are five tables including an order acceptance table, a shipping instruction table, a delivery table, an inspection table, and a sales table for each input process.

In other words, in the conventional ERP system, tables to be updated differ for each input process. Accordingly, mapping between a plurality of business processes belonging to the same process flow is performed by assigning an identifier (in Fig. 18, an order number and an order specification in the shipping instruction table and a shipping instruction number, a shipping instruction specification, and the like in the delivery table) to data (process data) relating to each business process.

Accordingly, in the conventional ERP system, for one input process, it is necessary to specify a table according to the type of input process and input an identifier of other corresponding process data. In other words, for example, in the case illustrated in Fig. 18, when process data relating to a business process "shipping instruction" relating to process data (in order words, various kinds of data in which an order number "A00001" and an order specification number "0010" are stored in the same column in the order acceptance table) specified by an order number "A00001" and an order specification number "0010" is registered in databases included in the ERP system, it is necessary to register, the order number "A00001" and the order specification number "0010" together with a shipping instruction number and a shipping instruction specification number used for specifying process data, a type representing the type of business process, and data (for example, the orderer, the quantity, the amount of money, shipping instruction date, a shipping text, and the like) representing the content of the business process as the process data relating to the business process "shipping instruction" . In such a case, there is a problem from a viewpoint of effective data processing such as registration of partially-same data (for example, the orderer, the quantity, the amount of money, and the like) in a plurality of tables.

In addition, in the conventional ERP system, in a case where a form according to a user's request is generated by using various kinds of data stored in various tables, it is necessary to search for required process data by tracing the identifier of the process data and individually acquire the process data. Accordingly, in a case where the process flow includes a plurality of business processes, there is a problem in that the processing load required for outputting the form relating to the process flow is excessively high.

An object of the present invention is to further improve the security and to reduce the processing load required for updating data or searching for data in a business system (ERP system) providing information relating to a form for a portable communication terminal by solving the above-described problems.

### Solution to Problem

According to the present invention, there is provided a portable terminal managing server that is a server operated by ERP and provides various kinds of data through a communication network in accordance with a request from a portable terminal used by a user. The portable terminal managing server includes: a process flow data storing means that stores process flow data including various kinds of data relating to a process flow including a plurality of business processes; a process flow data updating means that updates the process flow data stored in the process flow data storing means in accordance with a progress status of the process flow; a login determining means that determines whether login is permitted to the portable terminal when there is a login request from the portable terminal; a login processing means that performs a login process in a case where login is determined to be permitted by the login determining means; a reading request reception means that accepts a reading request for the process flow data from the portable terminal that is in a login state for which the login process is performed by the login processing means; and a process flow data providing means that provides the process flow data stored in the process flow data storing means for the portable terminal in accordance with the reading request accepted by the reading request reception means. The process flow data is data including status data, common data, and process specific data, the status data is data representing progress statuses of the plurality of business processes included in the process flow, the common data is data that is common to the business processes included in the same process flow, the process specific data is data that is unique to each business process included in the same process flow, and the process flow data updating means updates the status data in accordance with an update status of the process specific data.

By employing the above-described configuration, in a business system providing information relating to a form for a portable communication terminal, the security is further improved, and the processing load required for updating data or searching for data in an ERP system can be reduced.

Update condition data representing an update condition of the process flow data may be associated with the process flow data stored in the process flow data storing means, and the process flow data updating means may be configured to update the process flow data based on the update condition data associated with the process flow data to be updated.

A process flow data storing means that stores data, which satisfies a predetermined condition, of the process flow data stored in the process flow data storing means in a temporary storage database may be further included, and the process flow data providing means may be configured to provide the process flow data stored in the temporary storage database among the process flow data stored in the process flow data storing means for the portable terminal.

An update request reception means that accepts an update request for the process flow data from the portable terminal that is in the login state and an update-related information storing means that stores update-related information including an update content of the update request accepted by the update request reception means and terminal information representing the portable terminal performing the update request may be further included, and the process flow data updating means may be configured to update the process flow data stored in the process flow data storing means based on the update-related information stored in the update-related information storing means at predetermined timing.

The portable terminal may be configured to include a login determining means that permits login only in a case where a regular login operation determined in advance is received.

A logout processing means that performs a logout process releasing the login state in accordance with a logout request from the portable terminal and a history information removing requesting means that requests the portable terminal to remove communication history information relating to provision of the process flow data in accordance with the logout process performed by the logout processing means may be configured to be included.

A time measuring means that measures a time during which information is not transmitted or received to or from the portable terminal that is in the login state and a history information removing requesting means that requests the portable terminal to remove communication history information relating to provision of the process flow data in a case where the measured time measured by the time measuring means arrives at a predetermined time may be configured to be included.

According to the present invention, there is provided a portable terminal managing program that causes a portable terminal managing server to perform a process of providing various kinds of data through a communication network in accordance with a request from a portable terminal used by a user by operating ERP, the portable terminal managing program causes the portable terminal managing server including a process flow data storing means that stores process flow data including various kinds of data relating to a process flow including a plurality of business processes to perform: updating the process flow data stored in the process flow data storing means in accordance with a progress status of the process flow; determining whether login is permitted to the portable terminal when there is a login request from the portable terminal; performing a login process in a case where login is determined to be permitted in the determining of whether login is permitted; accepting a reading request for the process flow data from the portable terminal that is in a login state for which the login process is performed in the performing of a login process; providing the process flow data stored in the process flow data storing means for the portable terminal in accordance with the reading request accepted in the accepting of a reading request. The process flow data is data including status data, common data, and process specific data, the status data is data representing progress statuses of the plurality of business processes included in the process flow, the common data is data that is common to the business processes included in the same process flow, the process specific data is data that is unique to each business process included in the same process flow, and the status data is updated in accordance with an update status of the process specific data in the updating of the process flow data.

### Advantageous Effects of Invention

According to the present invention, in a business system providing information relating to a form for a portable communication terminal, the security can be improved, and the processing load required for updating data or searching for data can be reduced in the ERP system.

### Brief Description of Drawings

Fig. 1 is a block diagram that illustrates a configuration example of a form inquiry system.
Fig. 2 is a block diagram that illustrates an example of the configuration of a portable terminal managing server.
Fig. 3 is an explanatory diagram that illustrates an example of the stored state of process flow data.
Fig. 4 is an explanatory diagram that illustrates the stored state of update condition data.
Fig. 5 is a flowchart that illustrates an example of a process flow data providing process.
Fig. 6 is an explanatory diagram that illustrates an example of a data search screen.
Fig. 7 is an explanatory diagram that illustrates an example of a search result screen.
Fig. 8 is a flowchart that illustrates an example of a process flow data updating process.
Fig. 9 is an explanatory diagram that illustrates an example of an editing screen.
Fig. 10 is a flowchart that illustrates an example of a database updating process.
Fig. 11 is a flowchart that illustrates an example of a form output process.
Fig. 12 is an explanatory diagram that illustrates an example of a process flow data updating request input screen.
Fig. 13 is an explanatory diagram that illustrates an example of an update error notification displaying screen.
Fig. 14 is an explanatory diagram that illustrates an example of a form displaying screen.
Fig. 15 is an explanatory diagram that illustrates the transition of a form status based on the process flow data state.
Fig. 16 is an explanatory diagram that illustrates usefulness of the database updating process.
Fig. 17 is an explanatory diagram that illustrates an example of the stored state of progress status determining condition data.
Fig. 18 is an explanatory diagram that illustrates an example of the configuration of tables in a conventional ERP system.

### Description of Embodiment

Hereinafter, an example according to an embodiment of the present invention will be described with reference to the drawings.

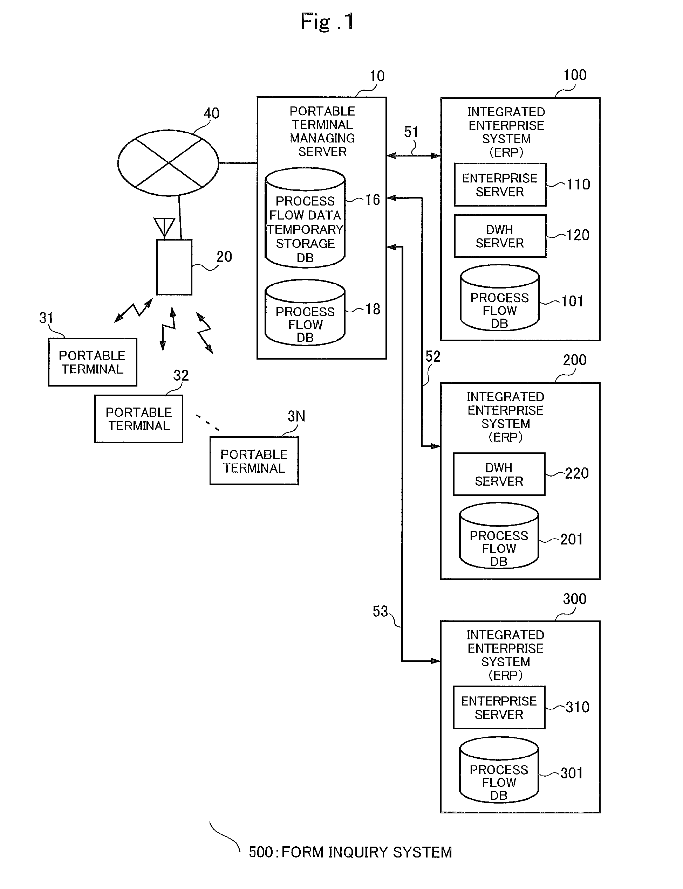

Fig. 1 is a block diagram that illustrates a configuration example of a form inquiry system 500 according to an embodiment of the present invention. As illustrated in Fig. 1, the form inquiry system 500 includes: a portable terminal managing server 10; a repeater 20; a plurality of portable terminals 31 to 3N (here, N is an arbitrary positive integer) ; and integrated enterprise systems 100, 200, and 300. The portable terminal managing server 10 and the portable terminals 31 to 3N are interconnected through a communication network 40 such as the Internet and the repeater 20. The portable terminal managing server 10 is connected to the integrated enterprise systems 100, 200, and 300 through a local area network (LAN) or communication networks 51, 52, and 53 such as dedicated communication lines. In addition, the portable terminals or the integrated enterprise systems may be configured to be communicable with each other through the portable terminal managing server or to be non-communicable with each other.

The integrated enterprise system 100 includes an enterprise server 110, a data warehouse server (DWH server) 120, and a process flow DB 101. The integrated enterprise system 200 includes a DWH server 220 and a process flow DB 201. The integrated enterprise system 300 includes an enterprise server 310 and a process flow DB 301.

A plurality of the integrated enterprise systems 100, 200, and 300 having mutually-different configurations communicate (transmit or receive various kinds of information) with the portable terminal managing server 10 as is necessary (that is, which depend on functions of the systems), thereby exhibiting the functions of the integrated enterprise systems. In other words, as a form inquiry system, even the system 200 not including an enterprise server or the system 300 not including a DWH server can exhibit the function of the integrated enterprise system by communicating with the portable terminal managing server 10. In addition, although not illustrated in the figure, even a system not including a process flow DB can exhibit the function of the integrated enterprise system by storing process flow data in the portable terminal managing server 10. In the enterprise server or the like included in each enterprise system, a known technology is used, and thus, hereinafter, the integrated enterprise system 100 will be described as an example.

It is assumed that the enterprise server 110 and the DWH server 120 are connected to each other through a dedicated communication line.

For example, the enterprise server 110 is a server that is managed by the supervisor of the form inquiry system 500 and has various functions for managing (for example, generation, update, storage, and the like of information) form information relating to various tasks. The enterprise server 110 is configured by a general information processing apparatus including an operating system (OS) and a relational DB.

Here, a form is a general term of an account book and a slip. In an account book, items relating to receipts and disbursements of money and products are written, and a slip is source data for generating an account book and is a proof of a business transaction or the like. In this example, a case will be described in which the enterprise server 110 handles process data representing only slip data as the form data.

The enterprise server 110 performs various processes in accordance with a business application program. As examples of the business application program, there are a sales managing program, a sales managing program, a production control program, a financial accounting managing program, and a management accounting managing program.

The DWH server 120, for example, is a server that is managed by a system supervisor of this system and has various functions for implementing a data warehouse. Here, a data warehouse represents a system analyzing the relevance between items in the business data such as form data accumulated in a time series. In addition, the DWH server 120 has a function for converting a file in the CSV format transmitted from the enterprise server 110 into a predetermined data format or the like and registering various kinds of data in a predetermined storage area (a business-related data DB 101b to be described later). Furthermore, the DWH server 120 may be configured not to convert the data format but to extract data corresponding to each storage area from the state of the CSV format.

The process flow DB 101 is a storage medium storing process flow data configured by various kinds of process data (or form data) that is collected, arranged, or the like by various kinds of information processing using various programs stored in a business application program DB (not illustrated in the figure) of the enterprise server 110. The process flow data will be described in detail later. In this example, the integrated enterprise system 100 includes a business-related data DB (not illustrated in the figure) managed by the DWH server 120. The enterprise server 110 has a function for converting the process data stored in the process flow DB 101 into a comma separated values (CSV) format in accordance with a predetermined extraction condition and transmitting the converted process data to the portable terminal managing server 10. In addition, in this example, the enterprise server 110 transmits the data file converted into the CSV form to the portable terminal managing server 10 through the file transfer protocol (FTP).

The portable terminal managing server 10 is a server that is operated by the ERP and is a server that provides various kinds of data through a communication network in accordance with a request from a portable terminal used by a user. The portable terminal managing server 10, for example, is configured by an information processing apparatus such as WWW server and is managed by the system supervisor of the form inquiry system 500.

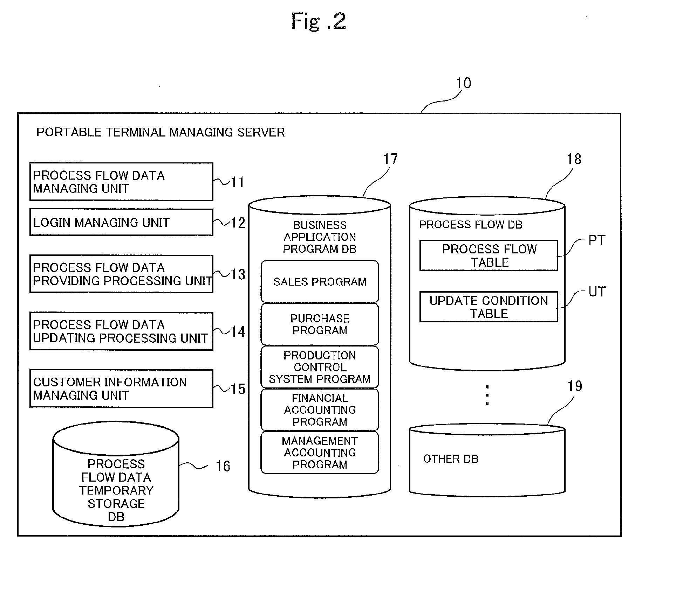

Fig. 2 is a block diagram that illustrates an example of the configuration of the portable terminal managing server 10. As illustrated in Fig. 2, the portable terminal managing server 10 includes: a process flow data managing unit 11 performing a process relating to the management of the process flow data; a login managing unit 12 performing a process relating to the management of login; a process flow data providing processing unit 13 performing a process of providing the process flow data for the portable terminals 31 to 3N and the like; a process flow data updating processing unit 14 performing a process of updating the process flow data in accordance with requests from the portable terminals 31 to 3N and the like; a customer information managing unit 15 performing a process relating to the management of customer information; a process flow data temporary storage DB 16; a business application program DB 17; a process flow DB 18; and the other DB 19 storing various kinds of data (for example, data used by various programs stored in the business application program DB 17) that is necessary for implementing the function of a general enterprise server. Here, the other DB 19 is a part that is not particularly related to the present invention, and thus, detailed description thereof will not be presented.

The process flow data temporary storage DB 16 is a storage medium temporarily storing the process flow data acquired from the integrated enterprise system 100 side or the process flow data stored in the process flow DB 18. The process flow data stored in the process flow data temporary storage DB 16, for example, is updated regularly (every day, every three days, every 12 hours, or the like).

The business application program DB 17 is a storage medium storing programs used for various businesses. As the programs stored in the business application program DB 17, there are a sales managing program, a purchase managing program, a production control program, a financial accounting managing program, a management accounting managing program, and the like.

The process flow DB 18 is a storage medium storing the process flow data configured by various kinds of process data (or form data) that is collected, arranged, or the like by various kinds of information processing using various programs stored in the business application program DB 17. In this example, a case will be described in which the process flow data including various kinds of data relating to a process flow including a plurality of business processes is stored in a process flow table PT in the process flow DB 18. In addition, in this example, a case will be described in which the process flow data generated for each process flow is uniformly managed in one process flow table PT by the portable terminal managing server 10. Furthermore, in this example, it is assumed that slip data (for example, for slip data corresponding to an order acceptance slip, data that is associated with order acceptance slip header information, order acceptance slip specification information, delivery date and schedule, and the like and is stored in a structure that is searchable based on a key such as a slip number or the like; an order acceptance number, a purchase order number, a shipping number, a storage and retrieval number, an invoice inquiry, a billing number, an accounting number, and the like are included in the slip number) that is generally used is included in the process flow data.

In addition, a configuration may be employed in which the portable terminal managing server 10 manages the process flow data, for example, using a plurality of tables for each type to be described later or for each data of which a part (for example, an orderer or the like) of the content of common data to be described later is the same.

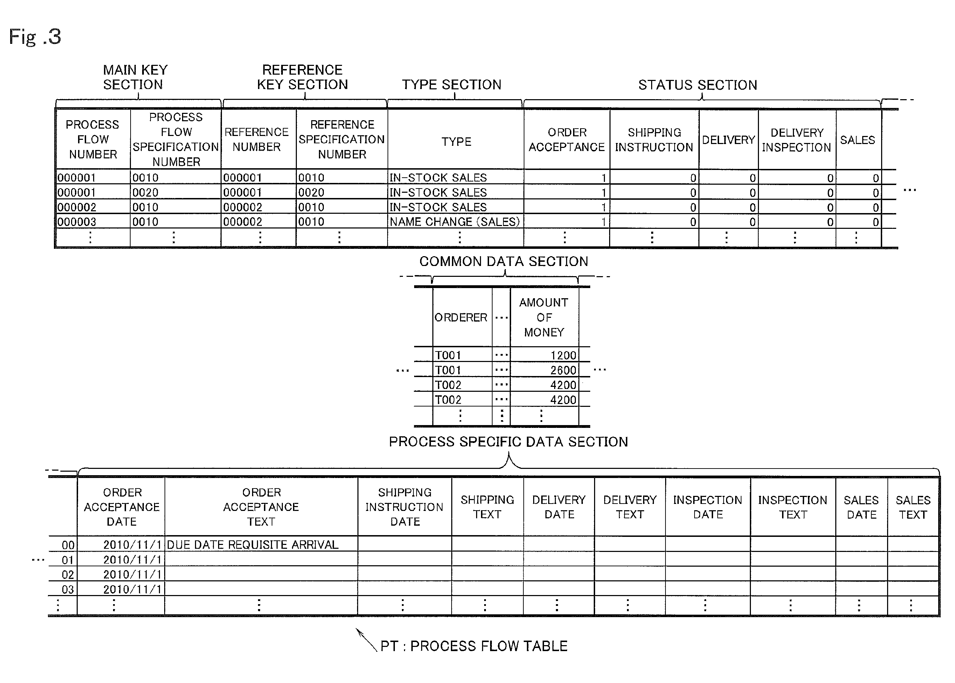

Fig. 3 is an explanatory diagram that illustrates an example of the stored state of the process flow data in the process flow DB 18. As illustrated in Fig. 3, in this example, the process flow data includes a main key section, a reference key section, a type section, a status section, a common data section, and a process specific data section. Here, items (in other words, each column item in the process flow table PT) corresponding to each section of the process flow data represents the type of process data configuring the process flow data. In other words, data relating to each business process configuring the process flow is stored to be assigned to each section configuring the process flow data. In addition, the process data relating to one process flow (for example, a series of the process flow from order acceptance from a company to delivery) is stored in the same entry (in other words, the same row in the process table PT) in the process flow table PT. By employing such a configuration, the correspondence relation among the process data can be defined.

Here, the "main key section" is a part, in which main key data that is data used for uniquely specifying the process flow data is stored, of the process flow data. In this example, the main key section is configured by a process flow number and a process flow specification number. In other words, in this example, a combination of a process flow number and a process flow specification number becomes an identifier (ID) of each process flow data. The main key section is updated at a time when the process flow data is registered for the first time. Here, "a time when the process flow data is registered for the first time" represents a time when an entry (data row) is added to the process flow data, for example, a time when process data, which belongs to a specific process flow, having a corresponding other process data that has not been registered is registered. In addition, the "update" described here includes the addition of data.

In addition, the "process flow number" is an identifier used for specifying one piece of process flow data (in other words, one column in the process flow table PT illustrated in Fig. 3). The process flow number is assigned to process data having a predetermined item that is the same. In this example, the same process flow number is assigned to the process flow data having the same type and the orderer among the process flow data.

Furthermore, the "process flow specification number" is an identifier used for specifying specific process flow data among the process flow data to which the same process flow number is assigned. In other words, for example, in the process flow table PT illustrated in Fig. 3, in the business process "order acceptance" in the type "in-stock sales" of the process flow, process flow data including process data representing the order acceptance of the business of the amount of money "1200" or "2600" from an orderer "T001" can be uniquely specified using a combination of a process flow number "000001" and a process flow specification number "0010" or "0020".

Thereafter, the "reference key section" is a part in which reference key data, which is data used for specifying another process flow data (or another process data) relating to the process flow such as an original transaction of sales return, is stored. In this example, the reference key section is configured by a reference number and a reference specification number. The reference key section is updated when the process flow data is registered for the first time.

In addition, in the reference number and the reference specification number, a process flow number and a process flow specification number of another process flow relating to the process flow are stored. However, in a case where there is no other process flow relating to the process flow as in the case of a new transaction, data (in other words, the process flow number is stored in the reference number, and the process flow specification number is stored in the reference specification number) representing the same values as those of the main key section of the same entry are stored. In addition, in a case where the reference key section represents another process data relating to the process flow, data used for specifying the type of process data is further disposed in the reference key section.

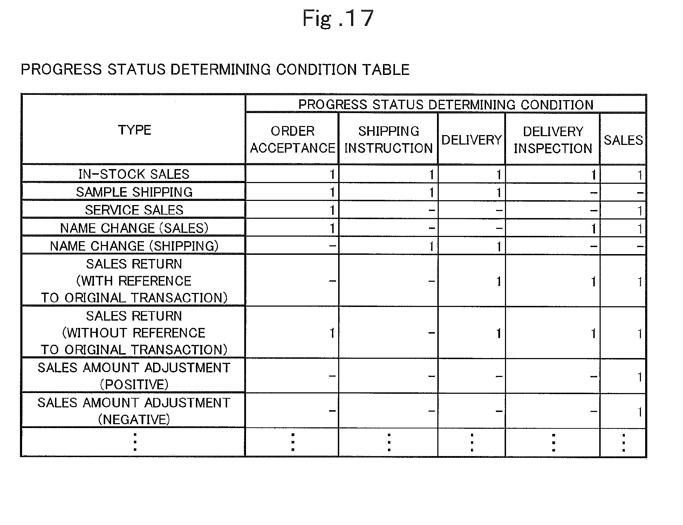

Furthermore, the "type section" is a part in which type data, which is data representing the type of process flow such as in-stock sales or sample shipping, is stored. The type section is updated when the process flow data is registered for the first time. Here, the kinds of the process flows are not limited to the in-stock sales and the sample shipping. In addition, it is assumed that processes that are required are determined in advance for each kind of the process flow (in other words, the kinds and the numbers of included business processes are different for each kind of the process flow. The other types of process flow will be presented later (see Fig. 17).

The "status section" is a part in which status data, which is data (in other words, data representing the progress statuses of a plurality of business processes included in the process flow) representing the progress of the process flow among the process flow data, is stored. In this example, the status data is set to "0" for an unsettled business process that is needed in the process flow and is set to "1" for a settled business process, thereby representing the progress of each business process. In other words, for example, as illustrated in Fig. 3, in a process flow of the "in-stock sales", in a case where the business processes included in the process flow are "order acceptance", "shipping", "delivery", "delivery inspection," and "stales", it is assumed that process specific data (for example, order acceptance data) relating to the business process "order acceptance" is registered. In such a case, in the status data, a part corresponding to the "sales" is "1", and the other parts are maintained to be in the initial states (in other words, a state in which "0" is set).

In other words, in this example, the status section is updated for each business process. In other words, the status section is updated when the process specific data to be described later is input, more particularly, when each business process is determined to have been completed in accordance with the satisfaction of a predetermined status change condition. Here, although the status change condition is not particularly limited, in this example, it is assumed that "all the process specific data corresponding to one business process is input" is stored in a predetermined storage area of the portable terminal managing server 10 as the status change condition.

In this example, since process flows of mutually-different kinds are stored in the same table, there is a case where there is a part, which stores process data that is unnecessary for a specific process flow, of items (column items) configuring the table. In such a case, in the process flow table, a part storing the unnecessary process data becomes empty data, and "0" is stored in the status data corresponding to the empty data.

In addition, the "common data section" is a part storing common data that is data (in other words, data that is common to business processes included in the same process flow) not depending on a business process such as an orderer or a shipping destination among the process flow data. The common data section is updated when the process flow data is registered for the first time.

The "process specific data section" is a part storing the process specific data that is data unique to each business process included in the same process flow such as order acceptance date or data (for example, text data representing precautions such as "due date requisite arrival" or "fragile goods (attention: fragile goods) " registered in each business process among the process flow data. The process specific data section is updated for each business process. Accordingly, in this example, among the process flow data, data that depends on a business process is the "process specific data" and data that does not depend on a business process is the "common data"

While the process flow data of this example has been described as above, the definitions of various terms represented in Fig. 3 will be simply described.

First, the "order acceptance" represents a state in which an order is received from a customer and a contract with the customer is made. In addition, the "shipping instruction" represents a state in which an instruction for shipping a product is made for a warehouseman or a distribution staff. The "delivery" represents that a product is shipped from the warehouse and starts to be transferred. In addition, the "inspection" represents that the inspection is completed by the customer, and the ownership of the product is changed over to the customer. The "sales" represents a state in which the customer's inspection is checked, and the amount of claims for the customer is finalized (the claims are accounted).

In addition, the term "inspection" is used to represent an "operation of inspecting whether or not a supplied product or service has the specifications (the quantity, the color, the shape, and the quality as ordered) as ordered" or the "transition of ownership of assets at the time of completion of the inspection" as well. In addition, in final accounting (or institutional account) or on an ERP system, in order to clarify the transition timing of the ownership of the assets, an event of "inspection" is defined to be different from the delivery.

In this example, in the process flow DB 18, an update condition table UT in which update condition data representing an update condition of the process flow data (or the process flow table PT) is registered may be included.

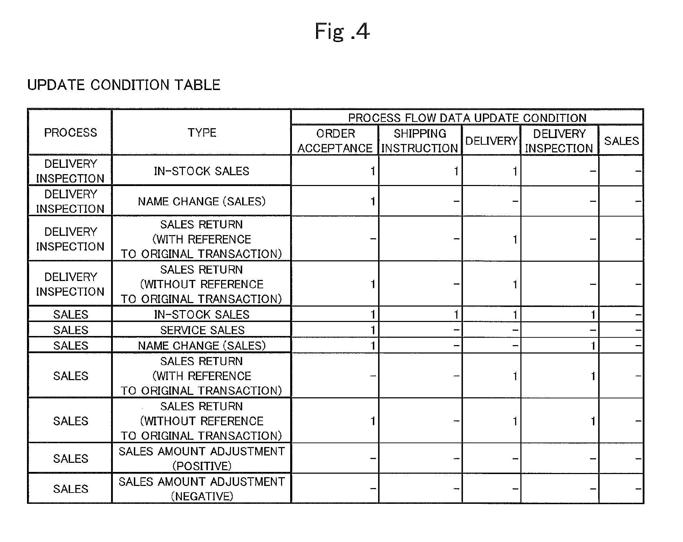

Fig. 4 is an explanatory diagram that illustrates the stored state of the update condition data that is stored in the update condition table UT in the process flow DB 18. As illustrated in Fig. 4, in this example, the update condition data includes a name of the business process, the type of process flow, and a process flow data update condition.

Here, the "process flow data update condition" represents a registration condition of process data according to the type of process flow. In this example, in a case where process data relating to a specific business process is added to the process flow data, the process flow data update condition represents the type of process data (in other words, the type of business process to be completed in the process flow) to be included in the process flow data as the premise thereof. In other words, in the case of the update condition table UT illustrated in Fig. 4, for example, for adding process data relating to the business process "delivery inspection" to the process flow data of the type "in-stock sales", it is necessary for the process data relating to the business processes "order acceptance", "shipping instruction", and "delivery" (in other words, in Fig. 4, business processes in which "1' s" are set in cells positioned in the same column as the business process name "delivery inspection" and the type "in-stock sales") determined in advance to be registered in the process flow data. In addition, the update condition table UT may be configured to be generated by the supervisor of the form inquiry system 500 or may be configured to be generated by users using the portable terminals 31 to 3N.

The portable terminal managing server 10 has a function of providing various kinds of data stored in the process flow DB 18 and the other DB 19 in accordance with requests from predetermined external apparatuses, in this example, the portable terminals 31 to 3N and the integrated enterprise systems 100, 200, and 300. In other words, the portable terminal managing server 10 has a function of the enterprise server. In other words, the portable terminal managing server 10 includes an ERP engine.

In addition, although not illustrated in the figure, in this example, the portable terminal managing server 10 is assumed to have a function as a DWH server having various functions for realizing a data warehouse. The portable terminal managing server 10 includes the ERP engine and the configuration for the function of the DWH server, and accordingly, information requested as an integrated enterprise system can be provided also for the integrated enterprise systems (for example, the integrated enterprise system 100 having both the enterprise server and the DWH server, the integrated enterprise system 200 having only the DWH server, and the integrated enterprise system 300 having only the DWH server) having mutually different configurations.

Each one of the portable terminals 31 to 3N is an information processing apparatus such as an I Pad (registered trademark) including a central processing unit (CPU), a ROM, a RAM, a display unit, and the like. In this example, each one of the portable terminals 31 to 3N is assumed to include various kinds of applications such as a Web browser and the like used for handling form data. In addition, in this example, each one of the portable terminals 31 to 3N has a function of defining a query (a search item, a search key, an extraction key, and the like) for acquiring necessary form data (in this example, the process flow data) from the portable terminal managing server 10, for example, in accordance with a user's operation input and transmitting the query to the portable terminal managing server 10.

In this example, each one of the portable terminals 31 to 3N has a function of communicating with the portable terminal managing server 10 through the repeater 20 and the communication network 40 and displaying data acquired from the portable terminal managing server 10 on the display unit using the function of software such as a predetermined Web application (Web browser).

Here, the process of updating the process flow data stored in the process flow data temporary storage DB 16 will be described. In this example, when it is timing for updating data (for example, in a case where the data is updated every day, a predetermined time (2 o'clock midnight or the like) that is set in advance, the portable terminal managing server 10 reads process flow data (latest data) stored in the process flow DB 18 included in the portable terminal managing server 10 and stores (newly stores, or rewrites) the process flow data in a predetermined storage area of the process flow data temporary storage DB 16, thereby updating the stored information of the process flow data temporary storage DB 16. As above, the stored information of the process flow data temporary storage DB 16 is updated through a batch process. The update of the process flow data stored in the process flow DB 18 will be described later in detail.

Next, the operation of the form inquiry system 500 of this example will be described with reference to the drawing. The contents of the operation and the process that are not particularly related to the present invention may not be presented.

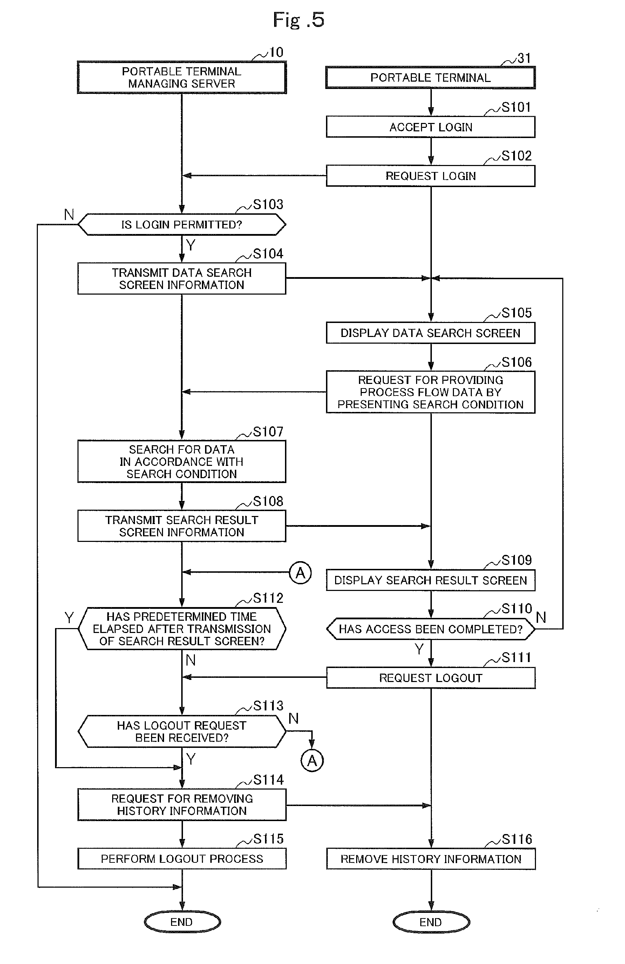

Fig. 5 is a flowchart that illustrates an example of a process flow data providing process performed by the portable terminal managing server 10 or the like in the form inquiry system 500 of this example. Here, a case will be described as an example in which the portable terminal managing server 10 provides process flow data in accordance with a request from a portable terminal 31 used by a user X.

In the process flow data providing process, first, the portable terminal 31 receives a login request according to a login operation of the user X (Step S101). As this login operation, for example, an operation of inputting a password set in advance or the like may be considered. When the login to the portable terminal 31 is permitted, it is permitted to perform various operations for using various functions mounted in the portable terminal 31.

In the state in which the user X is logged in the portable terminal 31, when a predetermined login operation is performed by the user X, the portable terminal 31 accesses the portable terminal managing server 10 and performs a login request (Step S102). In this login request, for example, predetermined information (for example, a digital certificate issued to the user X) used for a login determination set in advance is presented.

When the login request is received, the login managing unit 12 of the portable terminal managing server 10 determines whether or not the login is permitted (Step S103). This determination, for example, may be performed using an ID, a password, a digital certificate, and the like.

When the login is determined to be permitted (Y in Step S103), the login managing unit 12 sets the portable terminal 31 to be in a login state. When the login state is set, the process flow data providing processing unit 13 of the portable terminal managing server 10 transmits data search screen information representing a data search screen to the portable terminal 31 (Step S104). On the other hand, when the login is determined not to be permitted (N in Step S103), the login managing unit 12 ends the process flow data providing process without setting the portable terminal 31 to be in the login state. In addition, when the login is determined not to be permitted, the login managing unit 12 performs a process of notifying the portable terminal 31 of an indication thereof.

When the data search screen information is received, the portable terminal 31 displays a data search screen represented by the received data search screen information on the display unit included therein (Step S105).

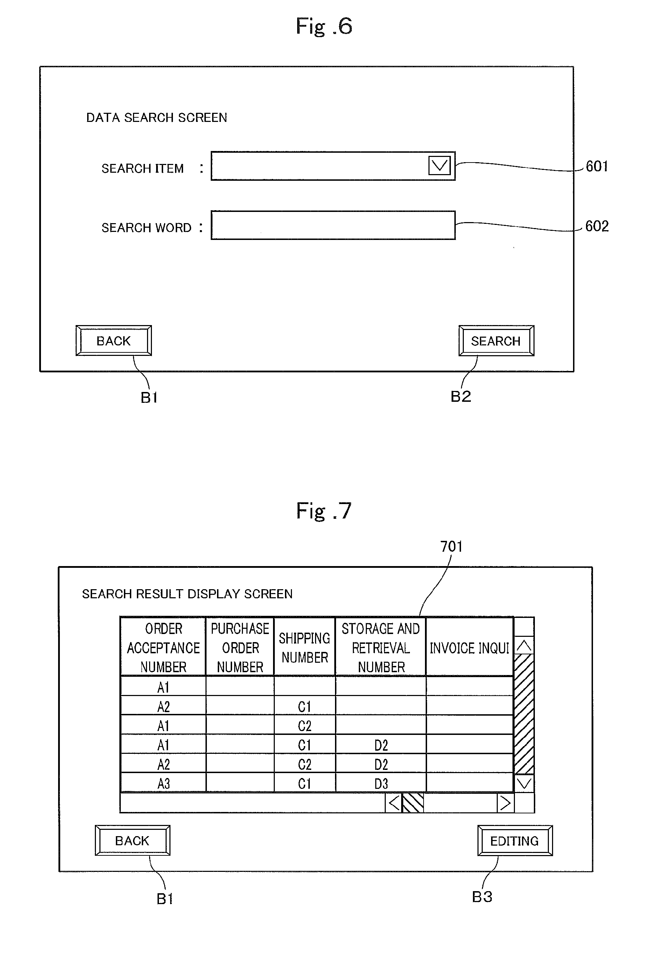

Fig. 6 is an explanatory diagram that illustrates an example of the data search screen. As illustrated in Fig. 6, on the data search screen, a search item input area 601 to which an item (search item) that is a search target is input, a search word input area 602 to which a keyword (search word) used at the time of searching is input, a back button B1 pressed for returning to the previous screen, and a search button B2 pressed for performing a search are arranged.

On the data search screen, the user X inputs a search item and a search word by operating an operating unit (for example, a keyboard displayed on the display unit on which a touch panel is arranged) included in the portable terminal 31 and presses the search button B2. To the search item, an item (for example, an order acceptance slip, a stock, customer, or a product name) configuring the process flow data is input. To the search word, a text string (for example, the name of a customer or the name of a product) relating to the process flow data is input.

When the search button B2 is pressed in the state in which the search item and the search word are input, the portable terminal 31 presents the search item and the search word, which have been input, to the portable terminal managing server 10 as a search condition, thereby making a request for providing process flow data (Step S106). Here, the above-described search condition is an example, and any other condition may be used as long as arbitrary process flow data (or process data configuring the process flow data) can be searched for the condition.

When the request for providing process flow data is received, the portable terminal managing server 10 searches for the process flow data in accordance with the search condition presented in the received providing request by referring to the process flow data temporary storage DB 16 (Step S107).

When the process flow data is retrieved in accordance with the search condition, the portable terminal managing server 10 transmits search result screen information representing a search result screen that displays the retrieved process flow data as a result of the search to the portable terminal 31 (Step S108).

When the search result screen information is received, the portable terminal 31 displays the search result screen represented by the received search result screen information on the display unit included therein (Step S109).

Fig. 7 is an explanatory diagram that illustrates an example of a search result screen. As illustrated in Fig. 7, on the search result screen, a display area 701 for displaying a search result, a back button B1 pressed for returning to the previous screen, and an editing button B3 pressed for editing the search result are arranged.

Thereafter, when an operation for ending the access such as an operation of ending the browser is performed by the user X (Y in Step S110), the portable terminal 31 makes a logout request for the portable terminal managing server 10 (Step S111). On the other hand, when an operation of continuing the access such as pressing the back button B1 is performed (N in Step S110), the portable terminal 31 proceeds to the process of Step S105 and displays the data search screen (see Fig. 6).

When the search result screen information is transmitted in Step S108, the login managing unit 12 starts to measure a time (standby time) during which information is not transmitted or received to or from the portable terminal 31 and monitors whether the standby time reaches (arrives at) a predetermined time (for example, 5 minutes, 10 minutes, 30 minutes, or the like) (Step S112).

When a logout request is received during the measurement of the standby time (Y in Step S113), the login managing unit 12 stops the measurement of the standby time, requests the portable terminal 31 to remove history information (communication history information, operation history information, and the like) according to the current communication (Step S114), and performs a logout process for releasing the login state (Step S115).

In addition, when the standby time is determined to have arrived at the predetermined time (Y in Step S112), the login managing unit 12 stops the measurement of the standby time, requests the portable terminal 31 to remove history information (communication history information, operation history information, and the like) according to the current communication (Step S114), and performs a logout process for releasing the login state (Step S115).

On the other hand, when the request for removing the history information is received, the portable terminal 31 performs the process of removing history information accumulated in the current communication with the portable terminal managing server 10 (Step S116).

As described above, it is determined whether to permit login to the portable terminal managing server 10 in accordance with a login request from the portable terminal 31 that can be operated by the login process, and the request for providing process flow data is accepted in a case where the login is permitted, and the process of providing the process flow data in accordance with the request is performed.

By performing the process of providing process flow data as described above, authentication can be performed both in Steps S101 and S103, it is possible to improve the security at the time of providing the process flow data for the portable terminal 31. In addition, in the process flow data providing process, by setting the target for searching for the process flow as the process flow data temporary storage DB 16, the portable terminal 31 does not need to access parts (more particularly, the business application program DB 17 and the process flow DB 18), which serve as the enterprise server, of the portable terminal managing server 10, and accordingly, the security at the time of providing the process flow data for the portable terminal 31 can be improved.

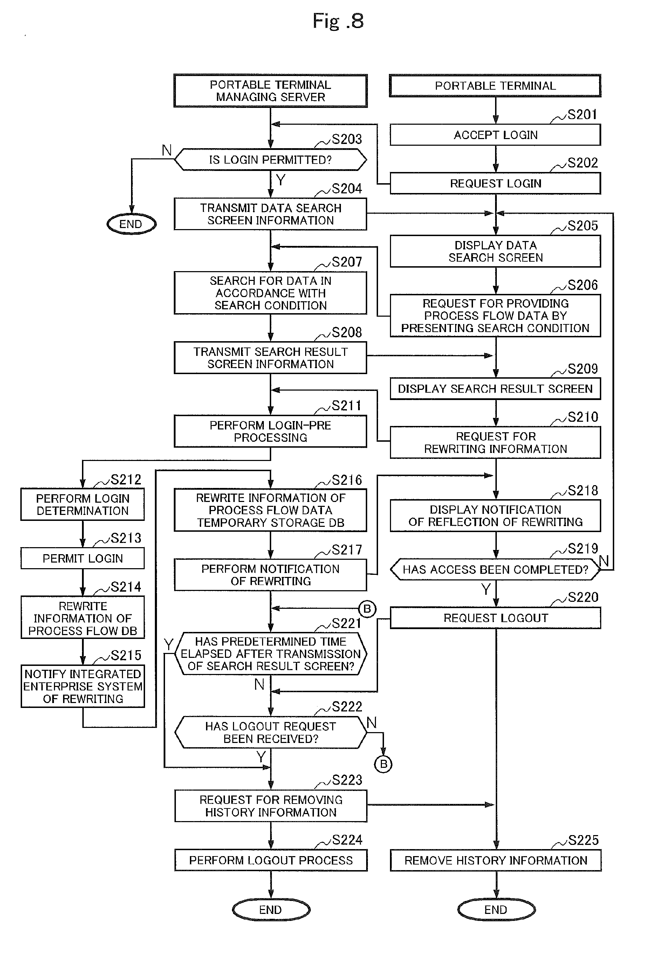

Fig. 8 is a flowchart that illustrates an example of a process flow data updating process performed by the portable terminal managing server 10 and the portable terminal 31. Here, a case will be described as an example in which the process flow data is updated in accordance with a request from the portable terminal 31 used by the user X.

Steps S201 to S209 of the process flow data updating process are the same as Steps S101 to S109 (see Fig. 5) of the process flow data providing process described above, Steps S219 to S225 of a business data updating process are the same as Steps S110 to S116 (see Fig. 5) of the process flow data providing process described above, and thus, detailed description of Steps S201 to S209 and S219 to S225 of the business data updating process will not be presented.

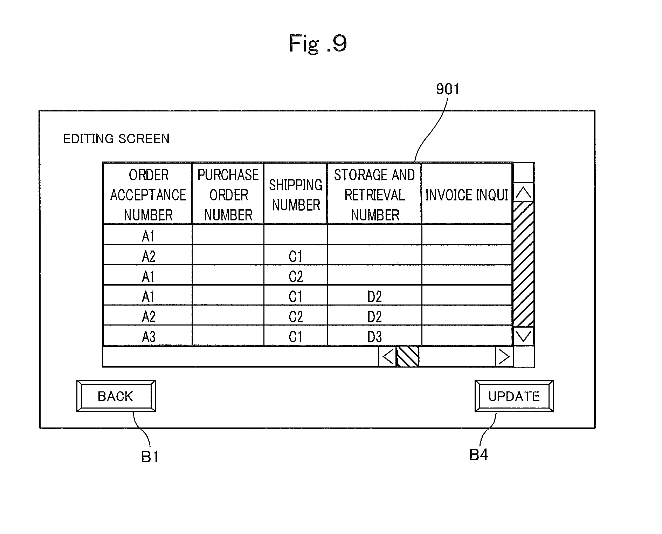

After the search result screen (see Fig. 7) represented by the search result screen information is displayed on the display unit included in the portable terminal 31 in Step S209 of the process flow data updating process, when the pressing of the editing button B3 is received, the portable terminal 31 displays an editing screen enabling the editing of the search result displayed in the display area 701. Fig. 9 is an explanatory diagram that illustrates an example of the editing screen. As illustrated in Fig. 9, on the editing screen, an editing area 901 displaying a search result to be editable, a back button B1 pressed for returning to the previous screen, and an update button B4 pressed for reflecting the editing result on the process flow data stored on the portable terminal managing server 10 side are arranged.

By performing adding (for example, a new registration of a slip), removing, changing, or the like of the process flow data displayed in the editing area 604 by operating the portable terminal 31 on the editing screen, the user X performs an operation of editing the process flow data displayed as a result of the search. Then, after the editing operation ends, in a case where the editing result is to be reflected on the process flow data stored on the portable terminal managing server 10, the user X presses the update button B4 by operating the portable terminal 31.

When the pressing of the update button B4 is received, the portable terminal 31 makes an information rewriting request for requesting the portable terminal managing server 10 to reflect the editing result (Step S210). In this request, the edited content, portable terminal managing server information (for example, a digital certificate issued to the portable terminal managing server 10) relating to the portable terminal managing server 10, and user information (for example, a digital certificate issued to the user X or the like) relating to the user X, and the like are presented.

When the information rewriting request is received, the portable terminal managing server 10 accesses the process flow DB 18 and performs a predetermined process (a pre-login process) before login (Step S211). In this example, the portable terminal managing server 10 performs a process for checking predetermined information (login determination information, for example, a digital certificate issued to the portable terminal managing server 10, a digital certificate issued to the user X, and the like) used for a login determination as the pre-login process.

When the login determination information is checked by the pre-login process, the portable terminal managing server 10 determines whether or not the login is permitted (Step S212). This determination may be performed, for example, using an ID, a password, a digital certificate, or the like.

In a case where the login is determined to be permitted, the portable terminal managing server 10 sets the portable terminal 31 to be in a login state (here, a state in which an access to the process flow DB 18 is permitted) relating to the reception of information from the portable terminal 31 (Step S213).

When the portable terminal 31 is set to be in the login state (in other words, the login is permitted) the portable terminal managing server 10 performs a process of rewriting corresponding process flow data stored in the process data DB 18 in accordance with the information rewriting request from the portable terminal 31 set in the login state (Step S214). Then, the portable terminal managing server 10 transmits a rewrite notification used for a notification of the rewriting according to the edited content to the integrated enterprise systems 100, 200, and 300 (Step S215). Thereafter, the integrated enterprise systems 100, 200, and 300 update the process flow DBs 101, 201, and 301 included therein in accordance with the received rewrite notification. In the process flow DBs 18, 101, 201, and 301, the contents rewritten in accordance with the information rewriting request from the portable terminal 31 may be configured to be stored. In other words, a configuration may be employed in which the subject and the time of rewriting the process flow data are recorded.

When the information stored in the process flow DB 18 is rewritten, the portable terminal managing server 10, similarly, performs the process of rewriting corresponding process flow data stored in the process flow data temporary storage DB 16 (Step S216). Then, the portable terminal managing server 10 transmits a rewriting notification used for a notification of the rewriting according to the edited content to the portable terminal 31 (Step S217).

When the rewriting notification is received, the portable terminal 31 displays a rewriting reflection notification used for notifying the user X of the reflection of the edited result in a predetermined area of the editing screen (Step S218).

Thereafter, similarly to the process flow data providing process (see Fig. 5) described above, the process of Step S219 and subsequent steps is performed.

As described above, it is determined whether to permit the login to the portable terminal managing server 10 in accordance with a login request from the portable terminal 31 that can be operated by the login process (Step S203), a rewriting request for the process flow data is accepted in a case where the login is permitted (Step S210), a pre-login process is performed for the process flow DB 18 in a case where the rewriting request is accepted (Step S211), and the process of rewriting the process flow data of the process flow DB 18 is performed in the case of the permission (Step S214). Then, the process of rewriting the process flow data is performed also for the process flow data temporary storage DB 16.

By performing the process of rewriting the process flow data as described above, authentication can be performed in Steps S201, S203, and Step S212 a total of three times, and accordingly, the security at the time of updating the process flow data in accordance with a request from the portable terminal 31 can be improved. In addition, in a case where the rewriting of information (data) is performed, by configuring to perform a login determination different from that of a case where the information is provided, the access of the portable terminal 31 to various DBs can be limited, whereby the security at the time of updating the process flow data in accordance with a request from the portable terminal 31 can be improved.

In the example described above, while a configuration is employed in which the portable terminal managing server 10 performs a login determination for the process flow DB 18 every time when a rewriting request is received by the portable terminal managing server from the portable terminal 31, and data is rewritten in a case where the login is permitted, a configuration may be employed in which the portable terminal managing server 10 accumulates edited contents and information (information required for authentication) relating to the portable terminals 31 to 3N that are rewriting request sources in a case where rewriting requests are received from the portable terminals 31 to 3N, and a rewriting process is performed for the process flow DB 18 through a batch process at predetermined timing (for example, at 23 o'clock every day). In such a case, at predetermined timing, login determinations are made by presenting the information relating to the portable terminals 31 to 3N that are rewriting request sources, and only edited contents of which the rewriting request sources are terminal apparatuses permitted to login may be reflected on the process flow data in the process flow DB 18.

In other words, a configuration may be employed in which the portable terminal managing server 10 receives an update request (information rewriting request) of the process flow data from a portable terminal that is in the login state, update related information including an update content (edited content) of the received update request and the terminal information (for example, a digital certificate) representing the portable terminal that has made the update request is accumulated (for example, accumulated in a storage medium included in the portable terminal managing server 10), the process flow data is updated using the accumulated update related information in a batch mode at predetermined timing (for example, 23 o'clock every day or the like), and update processes (information rewriting) according to the update requests received from the portable terminals that are in the login state are performed together. By configuring as such, the number of accesses made to the process flow DB 18 can be markedly decreased, and accordingly, the security can be further improved.

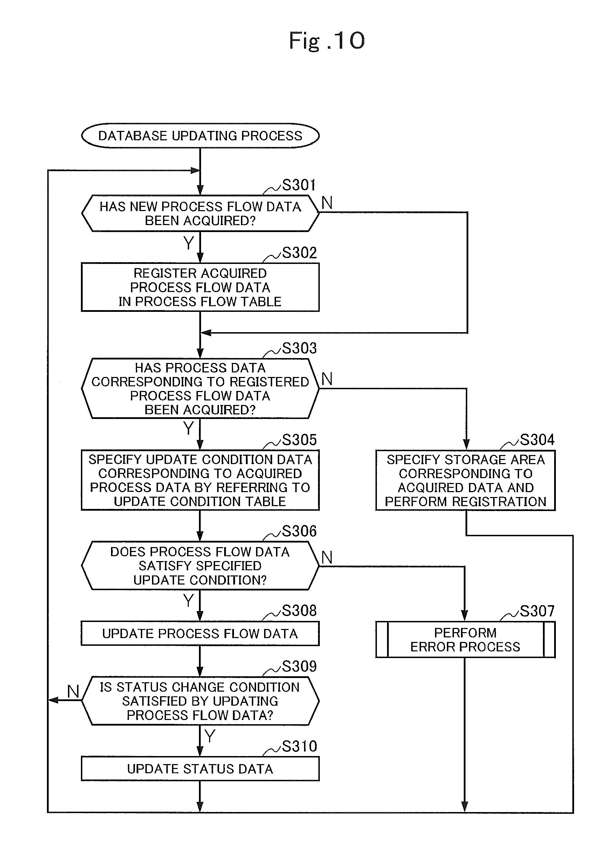

Fig. 10 is a flowchart that illustrates an example of a database updating process performed by the portable terminal managing server 10. In the database updating process, a process for updating the process flow data stored in the process flow DB 18 is performed in the portable terminal managing server 10. In this example, the portable terminal managing server 10 is assumed to acquire various kinds of process data collected and arranged by various kinds of information processing using various programs stored in the business application program DB 17 and the process flow data at a predetermined time, and the database updating process to be described hereinafter is different from that of a case (for example, the process flow data updating process described above, see Fig. 8) where data is updated in accordance with an update request from the portable terminals 31 to 3N.

In the database updating process, first, the portable terminal managing server 10 determines whether or not new process flow data (new process flow data) has been acquired (Step S301). Here, in a case where new process flow data is determined not to have been acquired (N in Step S301), the portable terminal managing server 10 proceeds to the process of Step S303 to be described later.

On the other hand, in a case where new process flow data is determined to have been acquired (Y in Step S301), the portable terminal managing server 10 registers the acquired process flow data in the process flow table PT (Step S302).

Thereafter, the portable terminal managing server 10 determines whether or not process data (in other words, data relating to business processes configuring the process flow) corresponding to the process flow data, which has been registered, has been acquired (Step S303).

The determination whether the process data acquired by the portable terminal managing server 10 is process data that has been registered is performed by determining whether or not process flow data having a combination of a process flow number and a process flow specification number included in the acquired data is stored in the process flow table PT. Accordingly, in this example, data (in other words, a process flow number and a process flow specification number) configuring the main key section is required to be included in the data (data input by an operator of the business, or data generated by a business application program) acquired by the portable terminal managing server 10.

Here, in a case where it is determined that the process data corresponding to the process flow data that has been registered has not been acquired (N in Step S303), the portable terminal managing server 10 specifies a storage area corresponding to the acquired data by referring to the other DB 19, registers the acquired data (Step S304), and proceeds to the process of Step S301.

On the other hand, in a case where it is determined that the process data corresponding to the process flow data that has been registered has been acquired (Y in Step S303), the portable terminal managing server 10 specifies update condition data corresponding to the acquired process data by referring to the update condition table UT corresponding to the acquired process data (Step S305). In this example, the portable terminal managing server 10 specifies update condition data based on the kinds of the business process represented by the process data and the identification information of the process flow (in other words, the process flow number and the process flow specification number).

When the update condition data is specified, the portable terminal managing server 10 determines whether or not the process flow data satisfies an update condition represented by the specified update condition data (Step S306). In other words, the portable terminal managing server 10 determines whether or not the acquired process data is registered in the process flow table PT as a part of the process flow data based on the process flow data and the update condition data. In this example, the portable terminal managing server 10 compares the status section of the process flow data corresponding to the acquired process data and the update condition data with each other and determines that the process flow data satisfies the update condition in a case where all the business processes set to "1" in the update condition data are set to "1" in the status section as well.

Here, in a case where it is determined that the process flow data does not satisfy the update condition represented by the specified update condition data (N in Step S306), the portable terminal managing server 10 performs a predetermined error process (Step S307) and proceeds to the process of Step S301. Here, the "error process" is not particularly limited as long as it is a process not updating the process flow data. Thus, for example, the error process may be a process in which the process data is temporarily stored in a predetermined storage area until the update condition is satisfied or a process (in other words, a process of notifying the supervisor of an error, a process of notifying the supervisor of a content of the update condition that is not satisfied, or the like) for checking the cause of the acquisition of the process data not satisfying the update condition.

On the other hand, in a case where it is determined that the process flow data satisfies the update condition represented by the specified update condition data (Y in Step S306), the portable terminal managing server 10 updates the process flow data registered in the process flow table PT (Step S308). In other words, the portable terminal managing server 10 registers the acquired process data in the process flow table PT.

When the process flow data is updated, the portable terminal managing server 10 determines whether or not a predetermined status change condition relating to the process flow data is satisfied in accordance with the update of the process flow data (Step S309). Here, in a case where it is determined that the predetermined status change condition is not satisfied in accordance with the update of the process flow data (N in Step S309), the portable terminal managing server 10 proceeds to Step S301.

On the other hand, in a case where it is determined that the predetermined status change condition is satisfied in accordance with the update of the process flow data (Y in Step S309), the portable terminal managing server 10 updates the status data included in the process flow data based on the satisfied status change condition (Step S310) and proceeds to the process of Step S301.

In this example, the database updating process, for example, ends by an end operation of the supervisor of the portable terminal managing server 10.

The database updating process may be a process performed in real time or a batch process performed for every specific unit time. In addition, the database updating process may be a process (a near real-time process) having a partial real-time property such as a process in which real time processing is performed only during a designated period.

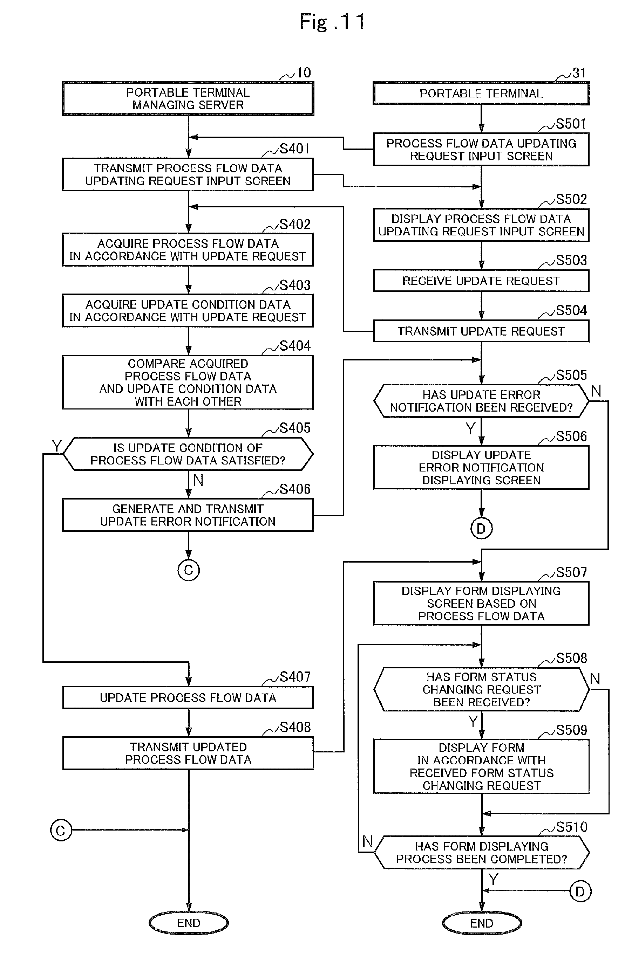

Fig. 11 is a flowchart that illustrates an example of a form output process performed by the portable terminal managing server 10 and the portable terminal 31. In the form output process, as the portable terminal managing server 10 provides the process flow data (a part of or the whole process flow data) for the portable terminal 31, a process of displaying a form on the display screen included in the portable terminal 31 is performed. For managing login, the same process as that of the above-described process flow data providing process (see Fig. 5) is performed, and thus description thereof will not be presented here. In addition, in the form output process, a form having a predetermined format is output, which is different from the process flow data providing process.

In this example, a case will be described as well in which the portable terminal managing server 10 updates the process flow data in accordance with a request from the portable terminal 31. In this example, a process flow DB 18 updating process (in other words, the process of updating the process flow DB 18 in the form output process) described here is one example of the database updating process (see Fig. 10).

In the form output process, first, the portable terminal 31 transmits a request for a process flow data updating request input screen to the portable terminal managing server 10, for example, in accordance with an operating input of the user X using the portable terminal 31 (Step S501).

When the request for the process flow data updating request input screen is received, the portable terminal managing server 10 transmits the process flow data updating request input screen in accordance with the received request for the process flow data updating request input screen (Step S401).

When the process flow data updating request input screen is received, the portable terminal 31 displays the process flow data updating request input screen on the display screen of the display unit included therein (Step S502).

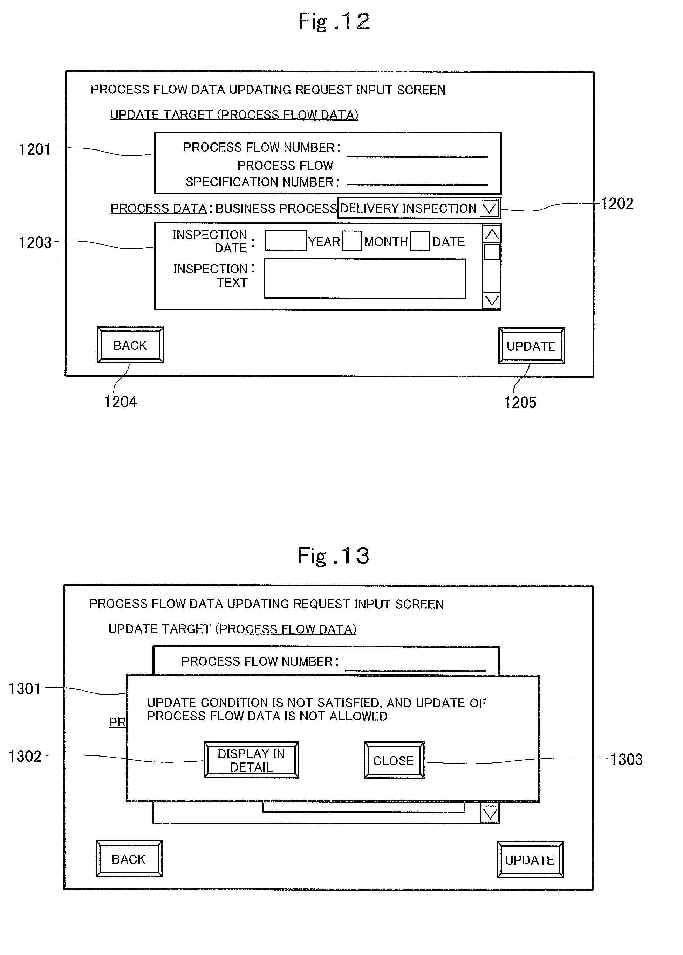

Fig. 12 is an explanatory diagram that illustrates an example of the process flow data updating request input screen. As illustrated in Fig. 12, on the process flow data updating request input screen, a main key data input area 1201 for receiving an input of identification information (in this example, data corresponding to the main key section of the process flow data, in other words, a process flow number and a process flow specification number) of an update target, a business process input area 1202 for receiving an input of the kind of the business process represented by the process data from the user X, a detailed data input area 1203 for receiving an input of the content of the other process data, a back button 1204 for receiving a request for switching the display screen output to the display unit to another display screen, and an update button 1205 for receiving an update request of the process flow data based on the content input to each input area (in this example, the main key data input area 1201, the business process input area 1202, and the detailed data input area 1203) are arranged.

On the process flow data updating request input screen, the user X operates an operating unit (for example, a display area or a button displayed on the display unit on which a touch panel is arranged) included in the portable terminal 31. In other words, for example, when each input area is pressed by a finger of the user X, the portable terminal 31 starts to receive an input of text data (including numbers and characters) for the pressed input area. Then, the portable terminal 31, for example, displays a keyboard (not illustrated in the figure) on the display unit on which the touch panel is arranged, receives an input of text data from the user X, and displays the received text data in a selected area. In addition, when a selection of the business process input area 1202 is received, the portable terminal 31 displays predetermined business process names to be selectable in a pull-down form. The method of inputting the process data is not limited thereto, and, for example, a configuration may be employed in which the portable terminal 31 receives a plurality of pieces of process data arranged in a predetermined data format at once.

When the selection of the update button 1205, which is made by the user X, is received, the portable terminal 31 determines that a process flow data updating request according to process data configured by data input to each input area is received (Step S503).

In a case where the process flow data updating request (update request) is determined to be received, the portable terminal 31 transmits the received update request to the portable terminal managing server 10 (Step S504).

When the update request is received, the portable terminal managing server 10 acquires process flow data corresponding to the received update request among the process flow data registered in the process flow table PT (Step S402). In addition, at this time, the portable terminal managing server 10 acquires the process flow data including the main key data (in other words, the data input to the main key data input area 1201) represented by the update request as process flow data corresponding to the update request (in other words, the received process data). Here, the "acquisition" represents temporary storage in a predetermined storage area for performing a comparison between the process flow data and the update condition data or the like in the process to be described later.

When the process flow data corresponding to the update request is acquired, the portable terminal managing server 10 acquires update condition data according to the update request (Step S403). Here, the update condition data according to the update request represents update condition data that can be specified by the business process and the type (in other words, a business process input to the business process input area 1202 and the type represented by the process flow data acquired in the process of Step S402) of the process flow data that are represented by the update request (see Fig. 4).

When the update condition data is acquired, the portable terminal managing server 10 compares the acquired process flow data and the update condition data with each other (Step S404) and determines whether or not the update condition of the process flow data is satisfied (Step S405).

Here, in a case where one or more items set to "1" in the update condition data are not set to "1" in the status section of the process flow data, and it is determined that the update condition of the process flow data is not satisfied

(N in Step S405), the portable terminal managing server 10 generates an update error notification, transmits the update error notification to the portable terminal 31 (Step S406), and ends the process.

When the update error notification is received (Y in Step S505), the portable terminal 31 displays an update error notification displaying screen on the display screen of the display unit included therein based on the received update error notification (Step S506).

Fig. 13 is an explanatory diagram that illustrates an example of the update error notification displaying screen. As illustrated in Fig. 13, on the update error notification displaying screen, an update error notification displaying area 1301 displayed to overlap the process flow data updating request input screen is arranged. Here, in this example, in the update error notification displaying area 1301, in addition to a fixed phrase used for notifying the user X of an update error, a detailed display button 1302 used for receiving a request for displaying a detailed update condition and a close button 1303 for receiving a request for removing the update error notification displaying area 1301 from the display screen are arranged.

In accordance with the reception of the selection of the detailed display button 1302, which is made by the user X, for example, the portable terminal 31 displays a result of the comparison between the process flow data and the update condition data in the portable terminal managing server 10 in a form (for example, a comparison table representing a status section of the process flow data and the process flow data updating condition of the update condition data) that can be recognized by the user X.

On the other hand, in a case where all the items set to "1" in the update condition data are not set to "1" in the status section of the process flow data, and it is determined that the update condition of the process flow data is satisfied (Y in Step S405), the portable terminal managing server 10 adds the process data represented by the update request to the process flow data and updates the process flow data (Step S407).

When the process flow data is updated, the portable terminal managing server 10 transmits the updated process flow data to the portable terminal 31 (Step S408) and ends the process.

When the process flow data is received, the portable terminal 31 displays the form displaying screen on the display screen of the display unit included therein based on the received process flow data (Step S507).

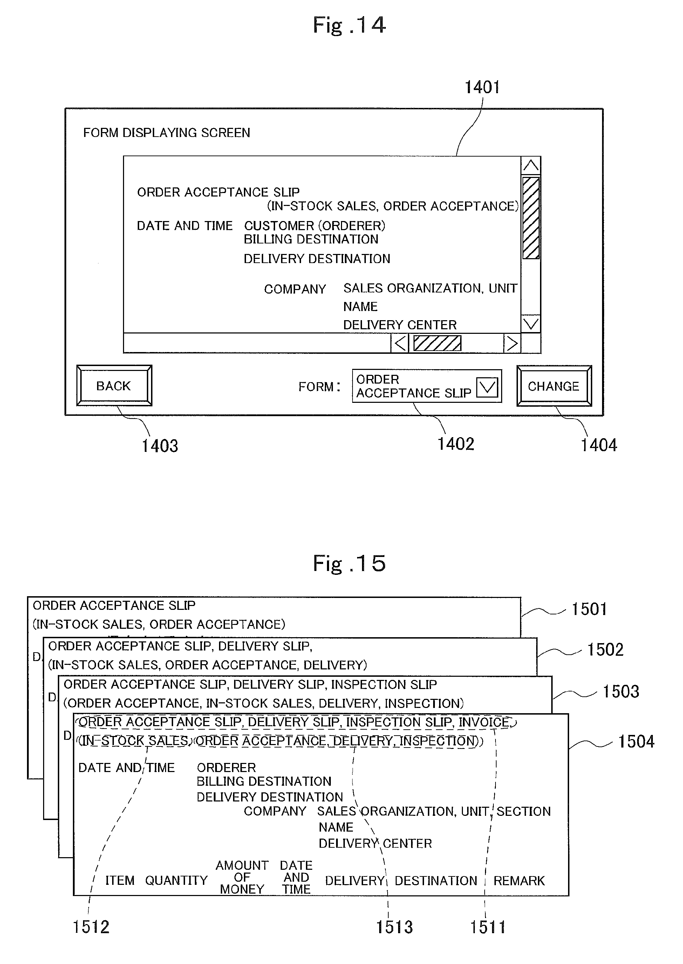

Fig. 14 is an explanatory diagram that illustrates an example of a form displaying screen. As illustrated in Fig. 14, on the form displaying screen, a form displaying area 1401 displaying a form based on the process flow data, a form status displaying area 1402, a back button 1403, and a change button 1404 are arranged. In addition, the portable terminal 31, for example, changes the scale of the form displayed in the form displaying area 1401 in accordance with an operation of a keyboard or the like that is included in the portable terminal 31.

Here, in the form displaying area 1401, a part of or the whole process flow data is displayed in a predetermined display form. In this example, it is assumed that information used for displaying a part of or the whole process flow data in a predetermined display form is generated by the portable terminal managing server 10 and is transmitted to the portable terminal 31, for example, at timing of Step S408 in the form output process. In addition, a configuration may be employed in which the portable terminal 31 displays a part of or the whole process flow data, which has been received, in the form displaying area 1401 in a predetermined display form based on information stored in a storage apparatus included therein.

In addition, the form status displaying area 1402 is an area for displaying the kind (or a status; hereinafter, referred to as a status) of the form displayed in the form displaying area 1401. As the statuses of the form, for example, various statuses such as an order acceptance slip, a delivery slip, an inspection slip, or an invoice may be considered.

The back button 1403 is a button used for receiving a request for returning the display screen to the process flow data updating request input screen. In addition, a configuration may be employed in which, in accordance with the reception of the selection of the back button 1403 that is made by the user X, the portable terminal 31 not only returns the display screen to the process flow data updating request input screen but also transmits a request for cancelling the update of the process flow data based on the update request to the portable terminal managing server 10. In such a case, in accordance with the selection of the back button 33, the portable terminal 31 may be configured to display the process flow data updating request input screen in a state in which the text data (a selected business process in the business process input area 1202) input in each input area (in this example, the main key data input area 1201, the business process input area 1202, and the detailed data input area 1203). By employing such a configuration, the user X can check the input content in an easy manner.

The change button 1404 is a button used for receiving a request for changing the display content in the form displaying area 1401. Hereinafter, the process of changing the display content of the form displaying area 1401 will be described.

When the form displaying screen is displayed, the portable terminal 31 determines whether or not a form status changing request has been received from the user X (Step S508).

In this example, the portable terminal 31, first, receives the selection of the form status displaying area 1402 that is made by the user X. Then, when the selection of the form status displaying area 1402 that is made by the user X is received, the portable terminal 31 displays a list of form status names representing the displayable shapes of the form to be selectable, for example, in a pull-down form.

It is assumed that the form status names displayed here are received together with the process flow data from the portable terminal managing server 10. More specifically, the portable terminal managing server 10 specifies form status names representing the displayable shapes of the form based on the data (form shape data) relating to the shape of the form stored in a predetermined storage area and the process flow data state (in other words, the input state of each column item of the process flow table PT). In other words, for example, in a case where the type of process flow data transmitted to the portable terminal 31 is the "in-stock sales", and only the process data relating to the business process "order acceptance" is registered in the process specific data section, the portable terminal managing server 10 specifies only a "order acceptance slip" as the form status name. In addition, in a case where the process data relating to the business process "delivery" is registered in addition to the process data relating to the business process "order acceptance", the portable terminal managing server 10 specifies an "order acceptance slip" and a "delivery slip" as the form status names.

Fig. 15 is an explanatory diagram that illustrates the transition of a form status based on the process flow data state. As illustrated in Fig. 15, images 1501 to 1504 are assumed to be the shapes of the forms (more specifically, the slips) displayable in the form displaying area 1401 based on the process flow data. In addition, the images 1501 to 1504 are explanatory diagrams for describing the transition of the form status and are not specific writing examples for achieving the roles of various forms.

Here, the image 1504 will be described as an example. In the image 1504, areas 1511, 1512, and 1513 are areas (in this example, text string displaying areas) representing form status names, the type of process flow, and names of the business processes of the process data included in the process flow data, respectively. In this example, the form status names corresponding to the kinds of the process data included in the process flow data are displayed in the area 1511.

In this case, as illustrated in a transition from the image 1501 to the image 1504 in Fig. 15, when process data corresponding to each business process is registered for one piece of the process flow data, the number of the kinds of the form status names (in other words, the displayable shapes of the forms based on the process flow data) increases. This represents not "whether there is a form of the next kind" but "the statuses of the forms increase in accordance with the process flow data state (in other words, the displayable kinds of the forms increase)".

Hereinafter, description will be continued for a case as an example in which, before the process of Step S507 in the form output process, the portable terminal 31 receives process flow data including the business processes "order acceptance", "shipping instruction", "delivery", and "delivery inspection". In addition, in this example, in the process of Step S507, the portable terminal 31 is assumed to display a form corresponding to the form status name "order acceptance slip" corresponding to the business process "order acceptance" located on the upper-most side of the business processes "order acceptance", "shipping instruction", "delivery", and "delivery inspection" in the process flow represented by the received process flow data in the form displaying area 1401 (see Fig. 14). The portable terminal 31 may be configured to display a form corresponding to the business process corresponding to process data newly added to the process flow data in the process of Step S407 in the form displaying area 1401.

In the form status changing request receiving determining process (Step S508), in a case where it is determined that a form status changing request has not been received from the user X (N in Step S508), the portable terminal 31 proceeds to the process of Step S510 to be described later.

On the other hand, in a case where it is determined that the form status changing request has been received from the user X (Y in Step S508), the portable terminal 31 displays a form according to the received changing request in the form displaying area 1401 (Step S509). In this example, the portable terminal 31 receives the selection of the form status name "delivery slip" corresponding to the business process "delivery" that is made by the user X and displays the form (delivery slip) corresponding to the business process "delivery" in the form displaying area 1401. In addition, in this case, the portable terminal 31 displays the form status name "delivery slip" in the form status displaying area 1402.

When the form according to the form status changing request is displayed, the portable terminal 31 determines whether to end the form output process (Step S510). Here, in a case where it is determined that the form output process does not end (N in Step S510), the portable terminal 31 proceeds to the process of Step S508.

On the other hand, in a case where it is determined that the form output process ends (Y in Step S510), for example, in accordance with the reception of a predetermined ending operation that is performed by the user X, the portable terminal 31 ends the process.

As described above, in the above-described embodiment, a configuration is employed in which the portable terminal managing server 10 that is a server operated by the ERP and provides various kinds of data through the communication network 40 in accordance with requests from the portable terminals 31 to 3N used by users includes the process flow DB 18 storing the process flow data including various kinds of data relating to the process flow including a plurality of business processes, updates the process flow data stored in the process flow DB in accordance with the progress status of the process flow, determines whether to permit login for the portable terminal 31 when there is a login request from anyone of the portable terminals 31 to 3N (hereinafter, the portable terminal 31) (for example, Step S203; see Fig. 8), performs a login process in a case where the login is determined to be permitted, receives a request for reading the process flow data from the portable terminal 31 that is in the login state for which the login process has performed (for example, Step S106 in which a providing request is received; see Fig. 5), and provides the process flow data stored in the process flow DB 18 for the portable terminal 31 in accordance with the received reading request (for example, Step S108; see Fig. 5). In addition, in the configuration, the process flow data is data including the status data, the common data, and the process specific data, the status data is data representing the progress status of each one of a plurality of business processes (for example, order acceptance, a shipping instruction, delivery, a delivery inspection, and sales) included in the process flow, the common data is data (for example, data representing the orderer, the amount of money, or the like) that is common to business processes included in the same process flow, the process specific data is data (for example, order acceptance date or order acceptance text) that is unique to each business process included in the same process flow, and the status data is updated in accordance with the update of the process specific data (for example, a corresponding status data is changed from "0" to "1" in accordance with the addition of the process specific data). Accordingly, in the business system (for example, a form inquiry system) providing information relating to a form for the portable communication terminal, the security is further improved, and the processing load required for updating data and searching for data in the ERP system (for example, a part serving as an enterprise server in the portable terminal managing server 10) (of the business system) can be reduced.

In other words, the server operated by the ERP performs login management and provides data, and accordingly, the security at the time of providing the business data (process flow data) for the portable terminal 31 can be improved. In addition, the data handled by the server is the process flow data, and accordingly, the amount of input/output data (I/O data) occurring at the time of updating data can be reduced.

In addition, in the above-described embodiment, a configuration is employed in which update condition data representing an update condition of the process flow data is associated with the process flow data stored in the process flow DB 18, and the portable terminal managing server 10 updates the process flow data based on the update condition data associated with the process flow data to be updated (for example, Step S405; see Fig. 11), and accordingly, the security at the time of updating the business data can be improved. In other words, for example, depending on the situation of the data management, in a case where the "delivery inspection" that is one kind of the business process is desired by the user to be necessarily registered only after data relating to the business processes "order acceptance", "shipping instruction", and "delivery" is registered, by only setting the update condition data, the update of the process flow data can be limited as is desired by the user.

Furthermore, although not particularly described in the above-described embodiment, a configuration may be employed in which the portable terminal managing server 10 stores data satisfying a predetermined condition (for example, a condition for not storing information that is especially important in the process flow data temporary storage DB 18 among the process flow data items stored in the process flow DB 18) among the process flow data items stored in the process flow DB 18 in the temporary storage database (for example, the process flow data temporary storage DB 16) and provides the process flow data stored in the temporary storage database among the process flow data items stored in the process flow DB 18 for the portable terminal 31 (for example, Step S107; see Fig. 5). By employing such a configuration, the data provided for the portable terminal 31 can be limited, and accordingly, the security can be improved.

In addition, in the above-described embodiment, since a configuration is employed in which the portable terminals 31 to 3N are permitted to login only in a case where a regular login operation determined in advance is received, the authentication may be configured to be necessary in the portable terminals 31 to 3N, and accordingly, double or triple authentication may be configured to be necessary, whereby the security can be further improved.

Furthermore, in the above-described embodiment, since a configuration is employed in which the portable terminal managing server 10 performs a logout process for releasing the login state in accordance with a logout request from any of the portable terminals 31 to 3N and requests the portable terminals 31 to 3N to remove communication history information relating to providing slip data in accordance with the logout process (for example, Step SS114; see Fig. 5), the communication history information can be removed, whereby information leakage due to the loss of the portable terminals 31 to 3N or the like can be prevented.

In addition, in the above-described embodiment, since a configuration is employed in which the portable terminal managing server 10 measures a time during which information is not received or transmitted from or to the portable terminals 31 to 3N that are in the login state and requests the portable terminals 31 to 3N to remove the communication history information relating to providing the process flow data when the measured time arrives at a predetermined time (for example, Step S112; see Fig. 5), the communication history information can be removed, whereby information leakage due to the loss of the portable terminals 31 to 3N or the like can be prevented.

Here, the reason for the amount of the input/output data (I/O data) occurring at the time of updating the data being considered to be reduced by configuring the data handled by the server to be the process flow data will be described for the database updating process (see Fig. 10) descried above as an example.

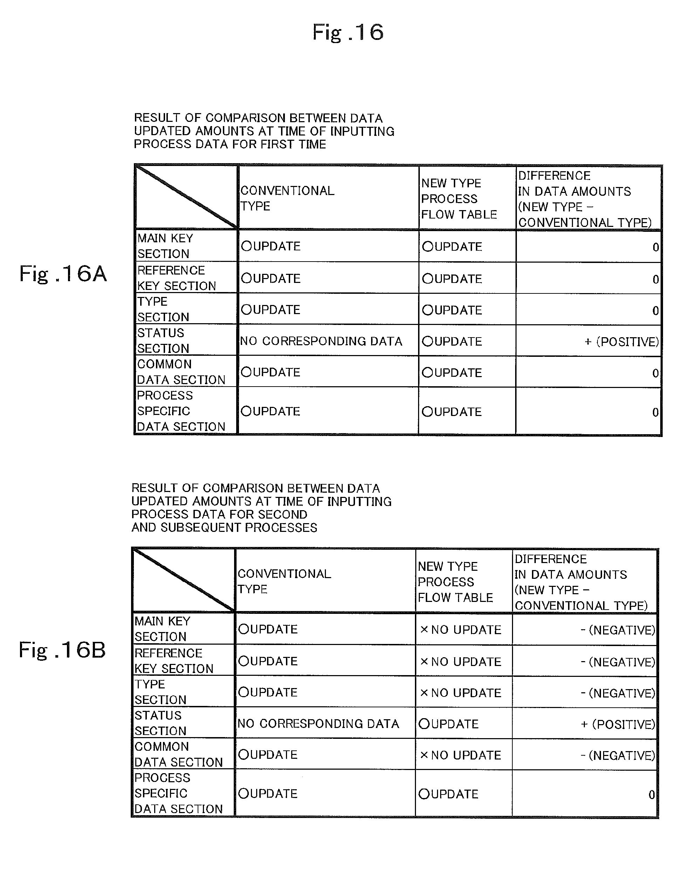

Fig. 16 is an explanatory diagram that illustrates usefulness of the database updating process (see Fig. 10) performed by the portable terminal managing server 10.

Fig. 16(A) is a table representing a result of the comparison of the amounts of updated data at the time of inputting process data for the first time. Here, the kind (in other words, the kind of the business process) of process data input for the first time is not particularly limited. In addition, the "conventional type", as illustrated in Fig. 18, represents a database including a table for each business process. Furthermore, "a difference between the data amounts" does not represent a strict numerical value, and, when a case in which data stored in the conventional-type table is updated is compared with a case where data stored in the new-type process flow table (in other words, the process flow table PT; see Fig. 3, hereinafter, in the case of being compared with the conventional type, it will be appropriately referred to as a "new type") is updated, a case where the handled data amount of the new type is larger than that of the conventional type is denoted by + (positive), a case where the handled data amount of the new-type is smaller than that of the conventional type is denoted by - (negative), and a case where the handled data amounts in the new type and the conventional type can be regarded to be the same is denoted by "0".

In such a case, at the time of inputting process data for the first time, the handled data amount of the new type is larger than that of the conventional type by an amount corresponding to the update of the status section. However, since the data amount of the status section is small, and substantially there is no large difference between the amounts of the I/O data (input data and output data) of the conventional type and the new type.

Fig. 16(B) is a table representing a result of the comparison of the amounts of updated data at the time of inputting process data for the second and subsequent processes. In other words, for example, Fig. 16 (B) is a table representing a result of comparison between updated data amounts when process data corresponding to business processes included in the process flow of which the main key section, the reference key section, the type section, the status section, the common data section, and a part of the process specific data section (for example, process specific data "acceptance data" and "order acceptance text" corresponding to the business process "order acceptance") have been completed to be input in the process flow table PT is input. In the "conventional type", in order to define the correspondence relation with the input-completed process data, for example, in a case where another process data (for example, process data (shipping instruction data) corresponding to the business process "shipping instruction") corresponding to the process data (order acceptance data) registered in the order acceptance table is input, as shipping instruction data, other than the data corresponding to the main key section, the reference key section, the type section, the common data section, and the process specific data section of this example (see Figs. 3 and 18), an "order acceptance number" and an "order acceptance specification" representing corresponding order acceptance data need to be input.

In such a case, when the process data is input for the second and subsequent processes, the new type updates only the status section and the process specific data section, and accordingly, the amount of the I/O data is smaller than that of the conventional type requiring all the parts other than the status section.

Accordingly, the amount of the I/O data of the new type is smaller than that of the conventional type, and accordingly, the new type is advantageous in terms of the performance of the system.

In other words, since the I/O for the database is reduced, the writing amount is reduced, the total capacity of the database can be reduced, and the processing load required for the data searching process can be reduced. In addition, as an additional factor of the reduction of the processing load required for the searching process, there is the process (process data) being not over a plurality of tables.

In addition, the new type has an advantage that the input sequence of the process data can be random to some degree. In other words, for example, when the type "in-stock sales" is regarded, in the case of the conventional type, the sequence of the process flow is limited to the sequence of order acceptance, a shipping instruction, deliver, a delivery inspection, and sales, and the sequence cannot be changed. The reason for this is that, in the table structure of the conventional type, the relation between business processes is represented to include a main key of the former business process in the data of the latter business process (for example, the "order acceptance number" and the "order specification" in the shipping instruction table; see Fig. 18). On the other hand, in the table structure of the new type, data of the related business processes is stored in the same entry (in other words, in the same column in the same table). Accordingly, the sequence of the business process can be modified in a flexible manner without having a restriction on a former/latter relation between business processes. In other words, in a case where the sequence of the actual businesses is "the order acceptance after the shipping instruction", the input sequence of the process data may be in a form following the sequence of the actual businesses. Accordingly, the new type is advantageous in terms of progress management (in other words, internal control) over the conventional type. More specifically, the business sequence of the current wholesale industry is "order acceptance after the shipping instruction".

Furthermore, in the new type, by configuring the content of the update condition data, for example, to be settable by the supervisor of the system or the user, an unauthorized input of process data can be prevented. In other words, a restriction may be applied on the update of the process data by setting the update condition data, and accordingly, a restriction can be applied on the sequence incurring a problem in the internal control such as "sales without actual delivery can be counted", whereby the reliability of the database can be improved.

In addition, according to the new type, the load required for inquiring the progress of the process flow can be reduced. In other words, in a case where the progress of the process flow is checked, in the table structure of the conventional type, sequentially from a beginning slip table to a final slip table, the registration statuses of all the tables need to be checked. For example, in the case of the type "in-stock sales" as an example, five tables of the order acceptance, the shipping instruction, the delivery, the delivery inspection, and the billing need to be checked. On the other hand, in the table structure of the new type, since the progress status of the process flow is included as the "status section", the progress can be checked by inquiring only one table or one entry. This is advantageous when the progress status inquiring screen is used or developed.

Furthermore, by employing a configuration in which a database (for example, the process flow DB 18) is included in the process flow data managing server (for example, the portable terminal managing server 10) managing the process flow data generated for each process flow, and the process flow data managing server provides a part of or the whole process flow data for a client in accordance with a request from the client (for example, the portable terminals 31 to 3N or the integrated enterprise systems 100, 200, and 300), a system having processing load required for providing the data (for example, process flow data representing form information necessary for generating a form) relating to the business flow that is less than that of a conventional case can be built.

In addition, although not particularly described in the above-described embodiment, a configuration may be employed in which an unsatisfied update condition that is an update condition that is not satisfied is specified in accordance with a determination of not registering the process data that is made by the process flow data managing server (for example, the portable terminal managing server 10), a client (for example, the portable terminals 31 to 3N and the integrated enterprise systems 100, 200, and 300) is notified of the specified unsatisfied update condition, it is determined whether or not the specified update condition as the unsatisfied update condition is satisfied at predetermined timing, and the process data corresponding to the update condition is registered in the process flow table PT in accordance with determining that the specified update condition as the unsatisfied update condition is satisfied. By employing such a configuration, the client is prevented from inputting the same data a plurality of times. In other words, when a user notified of the unsatisfied update condition performs an operation for satisfying the unsatisfied condition, the process data that has been input is registered in the process flow table, and accordingly, the user does not need to input the process flow data again. In addition, on the server side managing the process flow data, the process flow data corresponding to the received process data does not need to be specified, and the process necessary for the determining whether the update condition is satisfied does not need to be performed again, whereby the number of times of performing the same process can be reduced.

Furthermore, although not particularly described in the above-described embodiment, the database (for example, the process flow DB 18) includes a progress status determining condition table in which progress status determining condition data that is data representing the determination condition of the progress status of the process flow is registered, and the process flow data managing server (for example, the portable terminal managing server 10) determines whether the status data (for example, data stored in the status section of the process flow table PT; see Fig. 3) satisfies the progress status determining condition based on the progress status determining condition, and the client (for example, the portable terminals 31 to 3N or the integrated enterprise systems 100, 200, and 300) is notified of the progress status according to the progress status determining condition determined to be satisfied.

Fig. 17 is an explanatory diagram that illustrates an example of the stored state of progress status determining condition data that is stored in the progress status determining condition table. As illustrated in Fig. 17, the progress status determining condition data of this example includes the type of process flow and a progress status determining condition according to the type of process flow.

Here, as the types of process flow, in addition to the above-described in-stock sales, there are various types such as sample shipping, service sales, a name change (sales), a name change (shipping), sales return (with reference to the original transaction), sales return (without reference to the original transaction), sales amount adjustment (positive), and sales amount adjustment (negative) having mutually different business processes.

Here, the "progress status determining condition" represents a determination criterion of the progress status of the process flow, and, in this example, it is assumed that "1" is set to the business processes (for example, business processes set in advance for each type among the order acceptance, the shipping instruction, the delivery, the delivery inspection, and the sales) necessary for each type of process flow.

In a case where the process flow data, which is stored in the process flow table PT, having the status stored in the status section that matches the progress status determining condition data, the portable terminal managing server 10 determines that the entry of the process flow data is in the "completed" state (in other words, it is determined that the process flow represented by the process flow data has been completed) and performs the process (notification process) for notifying a predetermined client of the determination. By employing such a configuration, a system capable of determining the business performing status can be built. Particularly, by only comparing the status data included in the process flow data and the progress status determining condition data with each other, the determination process of the business performance status can be performed, and the processing load required for determining the business performance status can be smaller than that of the conventional case in which the input status of data stored in a plurality of tables needs to be referred to.

In addition, the starting time of the progress status determining process or the notification process may be a time when there is a request from a client or a time that is determined in advance.

Furthermore, in the example of the progress status determining condition table described above, the progress status determining condition data is configured to include a completion condition used for determining whether the process flow has completed, and accordingly, a system in which the determination of the completion of a series of businesses can be easily performed can be built.

In addition, the progress status determining condition data is not limited to data used for determining that the process flow is in the "completed" state and, for example, may be configured to include data used for determining a "50% completed" state. Furthermore, the progress status determining condition data may be configured to represent the type of process data to be input until a predetermined time elapses from inputting the process data performed for the first time.

In addition, the progress status determining condition table may be configured to include not only a function for determining "whether all the data to be input has been input" as described above but also a function for limiting the input of data "such that data not to be input is not input". In such a case, for example, when the portable terminal managing server 10 updates the process flow table PT, in a case where process data to be added is process specific data, the kind of the process specific data to be added and the progress status determining condition table are compared with each other, and, in a case where the kind of the process specific data to be added corresponds to the business process that does not have "1" set in the progress status condition table, the process flow table may not be updated.

Furthermore, although not particularly described in the above-described embodiment, the database (for example, the process f low DB 18) may be configured to have a restriction on a change of the data content at least in a part of the data that has been registered in the process flow table PT in accordance with an input of predetermined data. In other words, for example, before process specific data relating to the process "delivery inspection" is registered in the process flow table PT included in the process flow DB 18, the common data section of the process flow table PT can be changed (for example, deletion or rewriting of data), but, after the process specific data relating to the process "delivery inspection" is registered in the process flow table PT, the common data section may be configured not to be freely changed. In such a case, for example, a configuration may be employed in which restrictions such as a password to be input or the condition to be satisfied may be added in a case where the content of the common data section is changed by the user. By employing such a configuration, the occurrence (in other words, the deficiency of matching the related data accompanied with a change in the data that has been input) of contradiction in the whole data accompanied in accordance with a change in a part of the data can be prevented.

In addition, although not particularly described in the above-described embodiment, the portable terminal managing server 10 performs the above-described processes (see Figs. 5, 8, 10, and 11) in accordance with the processing program (portable terminal managing program) stored in the storage medium included therein.

### Industrial Applicability

According to the present invention, in a business system (particularly, an ERP system) providing information relating to a form for a portable communication terminal, the security is further improved, and the present invention is useful for reducing the processing load required for updating data or searching for the data.

### Reference Signs List

- 10: portable terminal managing server
- 20: repeater
- 31 to 3N: portable terminal
- 40: communication network
- 51, 52, 52: communication network
- 100, 200, 300: integrated enterprise system
- 110, 310: enterprise server
- 120, 220: DWH server
- 500: form inquiry system

## Claims

1. A portable terminal managing server that is a server operated by ERP and provides various kinds of data through a communication network in accordance with a request from a portable terminal used by a user, the portable terminal managing server comprising:
a process flow data storing means that stores process flow data including various kinds of data relating to a process flow including a plurality of business processes;
a process flow data updating means that updates the process flow data stored in the process flow data storing means in accordance with a progress status of the process flow;
a login determining means that determines whether login is permitted to the portable terminal when there is a login request from the portable terminal;
a login processing means that performs a login process in a case where login is determined to be permitted by the login determining means;
a reading request reception means that accepts a reading request for the process flow data from the portable terminal that is in a login state for which the login process is performed by the login processing means; and
a process flow data providing means that provides the process flow data stored in the process flow data storing means for the portable terminal in accordance with the reading request accepted by the reading request reception means,
the process flow data being data including status data, common data, and process specific data,
the status data being data representing progress statuses of the plurality of business processes included in the process flow,
the common data being data that is common to the business processes included in the same process flow,
the process specific data being data that is unique to each business process included in the same process flow, and
the process flow data updating means updating the status data in accordance with an update status of the process specific data.

2. The portable terminal managing server according to claim 1,
wherein update condition data representing an update condition of the process flow data is associated with the process flow data stored in the process flow data storing means, and
the process flow data updating means updates the process flow data based on the update condition data associated with the process flow data to be updated.

3. The portable terminal managing server according to claim 1 or 2, further comprising a process flow data storing means that stores data, which satisfies a predetermined condition, of the process flow data stored in the process flow data storing means in a temporary storage database,
wherein the process flow data providing means provides the process flow data stored in the temporary storage database among the process flow data items stored in the process flow data storing means for the portable terminal.

4. The portable terminal managing server according to any one of claims 1 to 3, further comprising:
an update request reception means that accepts an update request for the process flow data from the portable terminal that is in the login state; and
an update-related information storing means that stores update-related information including an update content of the update request accepted by the update request reception means and terminal information representing the portable terminal performing the update request,
wherein the process flow data updating means updates the process flow data stored in the process flow data storing means based on the update-related information stored in the update-related information storing means at predetermined timing.

5. The portable terminal managing server according to any one of claims 1 to 4, wherein the portable terminal includes a login determining means that permits login only in a case where a regular login operation determined in advance is received.

6. The portable terminal managing server according to any one of claims 1 to 5, further comprising:
a logout processing means that performs a logout process releasing the login state in accordance with a logout request from the portable terminal; and
a history information removing requesting means that requests the portable terminal to remove communication history information relating to provision of the process flow data in accordance with the logout process performed by the logout processing means.

7. The portable terminal managing server according to any one of claims 1 to 6, further comprising:
a time measuring means that measures a time during which information is not transmitted or received to or from the portable terminal that is in the login state; and
a history information removing requesting means that requests the portable terminal to remove communication history information relating to provision of the process flow data in a case where the measured time measured by the time measuring means arrives at a predetermined time.

8. A portable terminal managing program that causes a portable terminal managing server to perform a process of providing various kinds of data through a communication network in accordance with a request from a portable terminal used by a user by operating ERP, the portable terminal managing program causes the portable terminal managing server including a process flow data storing means that stores process flow data including various kinds of data relating to a process flow including a plurality of business processes to perform:
updating the process flow data stored in the process flow data storing means in accordance with a progress status of the process flow;
determining whether login is permitted to the portable terminal when there is a login request from the portable terminal;
performing a login process in a case where login is determined to be permitted in the determining of whether login is permitted;
accepting a reading request for the process flow data from the portable terminal that is in a login state for which the login process is performed in the performing of a login process;
providing the process flow data stored in the process flow data storing means for the portable terminal in accordance with the reading request accepted in the accepting of a reading request,
the process flow data being data including status data, common data, and process specific data,
the status data being data representing progress statuses of the plurality of business processes included in the process flow,
the common data being data that is common to the business processes included in the same process flow,
the process specific data being data that is unique to each business process included in the same process flow, and
the status data being updated in accordance with an update status of the process specific data in the updating of the process flow data.
